# EUROPEAN PATENT SPECIFICATION

(11) **EP 2 930 496 B1**
(45) Date of publication and mention of the grant of the patent: **25.08.2021**
(21) Application number: 14305534.1
(22) Date of filing: 10.04.2014
(51) Int. Cl.: G01N 21/65, G01N 21/64, G02B 21/32, G01J 3/44, G02B 21/00

(54) **Raman micro-spectrometry system and method for analyzing microscopic objects in a fluidic sample**
Raman-Mikrospektrometriesystem und -verfahren zur Analyse von mikroskopischen Objekten in einer Fluidprobe
Système et procédé de micro-spectrométrie Raman pour l'analyse d'objets microscopiques dans un échantillon fluidique

(43) Date of publication of application: 14.10.2015
(73) Proprietor: Horiba France SAS, 91120 Palaiseau (FR)
(72) Inventor: Kashiwagi, Shinsuke, 59290 WASQUEHAL (FR); Kokota, Alexandre, 59260 LEZENNES (FR); Froigneux, Emmanuel, 59650 VILLEUNEUVE D'ASCQ (FR); de Bettingnies, Philippe, 59130 LAMBERSART (FR); Fitzgerald, Simon, WATFORD, Hertfordshire WD17 3DE (GB)
(74) Representative: Jacobacci Coralis Harle

(56) References cited:
- EP-A1- 1 855 141
- US-A1- 2002 020 800
- US-A1- 2011 114 831
- YE A AND ZHANG Y: "Micro-Raman spectroscopy of optically trapped single cell", PROCEEDINGS OF SPIE, vol. 7507, 4 November 2009 (2009-11-04), pages 750704-1-750704-8, XP055134250, ISSN: 0277-786X, DOI: 10.1117/12.838232
- JONÁS A ET AL: "Raman microspectroscopy of optically trapped micro- and nanoobjects", PROCEEDINGS OF SPIE, vol. 7141, 12 December 2008 (2008-12-12), pages 714111-1-714111-8, XP055134251, ISSN: 0277-786X, DOI: 10.1117/12.822382
- GESSNER R ET AL: "Identification of Biotic and Abiotic Particles by Using a Combination of Optical Tweezers and In Situ Raman Spectroscopy", CHEMPHYSCHEM, vol. 5, no. 8, 20 August 2004 (2004-08-20) , pages 1159-1170, XP55086521, ISSN: 1439-4235, DOI: 10.1002/cphc.200400026

## Description

### Technical Field

The present invention relates to a system and method for analysing microscopic objects within a liquid by the use of Raman spectrometry.

As used herein, the term microscopic object, or in short object, refers to any object having one dimension from sub-micron order to about 20 microns. The term microscopic object includes, but is not limited to, any type of mineral or organic molecule, biological sample, living cell or particle. The flowing liquid may be any type of liquid including, but not limited to water, and biological fluids.

### Background

Raman microspectrometry systems for analysing solid microscopic samples are commercially available for example from HORIBA Jobin Yvon.

Patent document EP 1 983 332 A1 describes a spectroscopic system for exploring the surface of a sample using angular displacement of a laser excitation beam through a microscope objective. Such a system enables to analyse a solid sample placed in the focus plane of a microscope with a microscopic resolution.

A typical Raman spectroscopic measurement takes from a few milliseconds to several minutes depending on the signal to noise ratio and on the spectroscopic resolution required.

However, Raman micro-spectrometry analysis of microscopic objects placed in a flowing liquid is less effective due to the movement of the microscopic objects caused by the flow inside of the liquid.

Optical trapping (OT or optical tweezers) based on the use of a focused laser beam has been used for trapping microscopic objects in a fluid or for moving a microscopic object toward a material immobilization structure in a fluidic cell for spectrometry analysis.

Patent document WO 2004/008121 A2 discloses the use of a same diode laser at a single wavelength of 785 nm for trapping a selected microscopic particle, such as a colloid particle or biological cell, at a first, relatively low power, so as to minimize photodamage to the sample, in particular when the particle is a living cell, and then at a second, higher power, necessary to produce Raman scattering signals.

Document WO 2006/130728 A2 discloses use of a same laser for optical trapping (OT) of a single-cell in a solution and for Raman spectrometry of the trapped single-cell. Optical trapping of a single-cell is accomplished by using a translation stage to move a biological cell to a close proximity of the Laser focus, at which point the cell is drawn into the focus and then trapped. The single laser has several wavelengths : a first wavelength is first selected for OT to avoid heating and photo-damage of the trapped cell ; then different excitations wavelengths are selected for collecting a plurality of Raman spectra of the trapped single-cell at different excitation wavelengths.

A same laser at different power levels or different wavelengths is thus used first for OT and then for Raman spectrometry of a single-cell. Generally, OT and Raman spectrometry cannot be used simultaneously in time without damaging the trapped particle or cell. Moreover, OT and Raman spectrometry can not be used for analysing simultaneously a plurality of microscopic objects spaced apart from each other in a flowing fluid.

By construction in such combined systems, the same laser source being used both for optical trapping and for Raman excitation, the laser beams for optical trapping and for Raman excitation are coaxial and have the same focusing point.

Document US 7,515,269 B1 discloses a liquid sample volume containing a single particle which is optically trapped and translated toward a microscope slide along the optical axis of the laser beam. The substrate holder is equipped with actuators for controlling in three dimensions the position of the sample relatively to the optical trap. The single particle is exposed to an interrogation wavelength to measure surface plasmon resonance (SPR) and conventional Raman. However, according to this document, the trapped liquid sample is first separated from a flowing fluid.

Document US 7,442,339 B2 discloses a process wherein, in a first step, a laser beam is used as optical tweezers for trapping a single particle in a microfluidic channel, for moving and releasing the trapped single particle in an immobilization structure. The optical tweezers is then removed so that the OT laser beam does not interfere with an optical detector downstream. In a second step, temporally and spatially separated from OT, another laser beam is used as Raman excitation for SERS of the single particle trapped in a material immobilization structure. In this device, the material immobilization structure enables stabilizing the particle during Raman spectrometry.

The publications "Micro-Raman spectroscopy of optically trapped single cell" by A. Ye and Y. Zhang, Proc. SPIE, vol. 7507, pages 750704-1 to 750704-8, 2009, "Raman microspectroscopy of optically trapped micro- and nanoobjects" by A. Jonáš et al., Proc. SPIE, vol. 7141, pages 714111-1 to 714111-8, 2008, and "Identification of Biotic and Abiotic Particles by Using a Combination of Optical Tweezers and In Situ Raman Spectroscopy" by R. Geβner et al., ChemPhysChem, vol. 5, pages 1159 to 1170, 2004, disclose Raman micro-spectrometry systems including integrated optical tweezers for trapping and manipulating single microscopic objects in a fluidic sample.

Even if analysing a plurality of microscopic objects in a flowing fluid using combined OT and Raman microspectrometry is feasible, it is however extremely time-consuming.

In prior art systems, the acquisition in series of the Raman spectra for a plurality of microscopic objects in a flowing fluid multiplies the acquisition time by the number of microscopic objects optically trapped one by one and then measured one after the other.

### Technical Problem

Thus, there is a need for a method and system enabling rapid and non-destructive optical spectrometry of one or a plurality of microscopic objects in a flowing fluid.

There is a need for a method and system enabling not only Raman spectrometry of a single object trapped in a flowing fluid, but also enabling Raman imaging of the surroundings of a trapped object.

### Summary of the invention

According to a first aspect, the invention concerns an optical micro-spectrometry system for analysing microscopic objects in a fluidic sample as defined in claim 1.

According to a second aspect, the invention also concerns an optical micro-spectrometry method for analysing microscopic objects in a fluidic sample as defined in claim 11.

Preferred embodiments of the invention are defined in the dependent claims.

### Brief description of the drawings

This description is given for non limiting illustrative purpose only and will better be understood when referring to the annexed drawings wherein:
- Figure 1 represents an optical micro-spectrometry system according to an embodiment of the invention;
- Figure 2 represents a detailed view of the optical tweezers system of the optical micro-spectrometry system of fig. 1;
- Figure 3 represents an optional module for absorption measurement in transmission configuration;
- Figure 4 represents an optional module for absorption measurement in reflection configuration.
- Figure 5A represents an observation image of a fluidic sample comprising microscopic particles in a fluid, fig. 5B represents the optical trapping of a selected particle and fig. 5C represents the displacement of said selected particle using the optical tweezers ;
- Fig. 6A represents an observation image of a fluidic sample comprising microscopic particles in a fluid and a particle selected using optical tweezers ; the enlarged view (6B) represents a scanning beam area for micro-spectrometric analysis, with the corresponding spectra associated with the selected particle (6C) and with the surrounding fluid (6D) ;
- Figures 7A and 7B represent optical trapping of a particle having a size smaller than the waist of the optical tweezers beam ; figure 7C to 7E illustrate optical trapping of a particle having a size larger than the waist of the optical tweezers beam ;
- Figures 8A to 8D illustrate multi-point optical trapping and manipulation of a trapped particle.

### Detailed description

### System

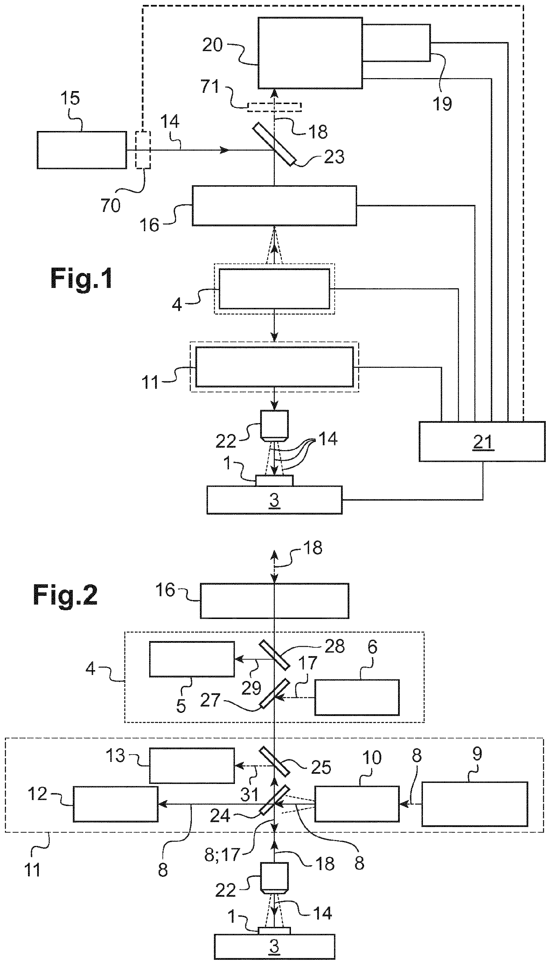

Figure 1 represents an example embodiment of an optical micro-spectrometry system. The optical micro-spectrometry system comprises a sample stage 3 adapted for receiving a fluidic sample 1. The fluidic sample comprises a fluid and microscopic objects immersed in said fluid. The fluid may be a gas, a viscous substance or a liquid, such as water or a biological liquid. In following examples, the microscopic objects have for example spherical or nonspherical shape. The microscopic objects comprise any type of object having a size from sub-micron scale to about 20 microns.

The optical micro-spectrometry system comprises a microscope objective 22 defining an incident optical axis, preferably normal to the surface of the fluid sample 1.

The microscope objective 22 is preferably a reflecting-type objective (e.g. a Cassegrain objective). A reflecting-type microscope objective 22 is achromatic which is preferred for focusing two laser beams at different wavelengths at a same point (X, Y, Z) as detailed below.

In general, the sample stage 3 is mounted on actuators adapted for moving the sample stage 3 relatively to the microscope objective 22, preferably along the X, Y and Z directions. The sample stage 3 is placed so that the image plane of the microscope objective 22 lies inside the fluid sample 1.

The optical microscope apparatus is preferably mounted in a confocal mode, enabling to add one or several optical modules into the confocal tube of said optical microscope apparatus, without modifying the optical setup of the microscope itself.

The optical micro-spectrometry system illustrated in figure 1 is a Raman microspectrometry apparatus. This system comprises a light source 15 emitting an incident light beam 14. The light source 15 is a laser having a wavelength in the range comprised between 190 and 1100 nm. An optical system including an injection-rejection filter 23 directs the incident light beam 14 toward the microscope objective 22, which focuses the incident light beam 14 at a first focusing point inside the fluid sample 1.

Optionally, a polarizer 70 is placed in front of the light source 15. This polarizer 70 includes for example a linear polarizer which is connected to a computer controller 21 for adjusting the angular orientation of the polarization axes of the polarizer 70.

The optical micro-spectrometry system also comprises a scanning device 16 inserted in the optical path between the light source 15 and the microscope objective 22. The scanning device 16 comprises for example two galvanometric mirrors producing angular displacement of the optical beam 14 along two directions transverse to the optical axis of said incident light beam 14. The documents US 2002/0020800 A1 and EP 1 855 141 A1 describe examples of a two-axis scanning device. Such a scanning device enables angular displacement of the incident optical beam 14 focused in the fluidic sample 1 within a scanning area, preferably along two orthogonal axes with respect to the sample surface.

The incident optical beam 14 irradiates the fluidic sample 1 which produces an output beam 18 resulting from scattering of the incident optical beam 14 on the fluidic sample 1. The output beam comprises both elastically scattered light, or Rayleigh scattered light, having the same wavelength as the incident light beam 14 and inelastically scattered light, or Raman scattered light 18, at wavelengths different from the wavelength of the incident light beam 14.

The output beam 18 is collected by the microscope objective 22 and directed along a return path toward the scanning device 16 and the injection-rejection filter 23. The scanning device 16 is configured so that the output beam exits from said scanning device 16 along a fixed direction, whatever the angular displacement of the incident light beam 14, that is whatever the orientation of the scanning mirrors in the scanning system 16. The injection-rejection filter 23 thus receives an output beam along the opposite direction as the incident light beam 14. The injection-rejection filter 23 is preferably a dichroic filter configured for spatially separating the Rayleigh scattered light, directed toward the light source 15, and Raman scattered light 18.

The Raman scattered light 18 is directed to the entrance of a spectrometer 20. Optionally, an analyser 71, for example a linear polarizer, is placed between the injection-rejection filter 23 and the spectrometer 20. This analyser 71 is preferably fixed in orientation.

A detector 19 at the output of the spectrometer 20 detects the Raman scattered light 18 as a function of the wavelength or as a function of the wavenumber. A computer 21 connected to the spectrometer 20 and to the detector 19 comprises an electronic and software system configured for analysing the detected Raman spectra, as a function of scanning the incident light beam 14 within the scanning area in the fluidic sample 1. The mapping result is displayed on a computer screen to analyse the result quantitatively and/or qualitatively.

The optical micro-spectrometry system also comprises an observation optical system 4 and a sample manipulating optical system 11 placed on the incident optical beam path between the scanning device 16 and the microscope objective 22.

As disclosed in more detail in Fig. 2, the observation optical system 4 includes an illuminator 6 and an observation camera 5. The illuminator 6 is preferably a broadband white light source and the observation camera 5 a visible camera. Alternatively, the illuminator 6 may be an infrared light source and the observation camera 5 an infrared camera. A beam combiner 27, such as a beam-splitter is placed on the optical beam path of the incident light beam 14 so as to combine the illumination light beam 17 generated by the illuminator 6. The illumination light beam 17 from the illuminator 6 thus irradiates the fluidic sample 1, preferably across the whole field of view of the microscope objective 22. A return beam 29 is generated by reflection and/or scattering of the illumination light beam 17 on the fluidic sample 1. A beam-splitter 28 is placed on the optical beam path of the return light beam 18, 29 and directs the return beam 29 to the observation camera 5, while transmitting the Raman scattered beam 18 toward the scanning device 16, spectrometer 20 and detector 19.

Preferably, the observation path is used to visualize the fluidic sample only during an observation step, but not at the same time as Raman measurement. In general, the optical micro-spectrometry system covers a wide spectral range of the wavelengths (for example from 200 nm to 2200 nm) and the observation optical system operates in a wavelength range for visualization (400-700nm) which overlaps or is included inside the spectral range of the optical micro-spectrometry system.

In order to avoid the reduction of the intensity of the Raman scattered beam 18, one may preferably choose 50/50 beam-splitters 27, 28.

The observation camera 5 thus enables to visualize images of the fluidic sample 1, including target particles 2. The computer 21 is connected to the observation camera 5, which transfers acquired images to an image processing system in the computer 21. For example, the image processing comprises an image recognition function, such as a particle finder function adapted to detect a target particle 2 in an image of the fluidic sample and/or to determine the position of the target particle 2 in the field of view 7 of the observation camera 5 and/or to determine the shape of a target microscopic particle 2.

The optical micro-spectrometry system also comprises a sample manipulating optical system 11 placed on the incident optical beam path between the scanning device 16 and the microscope objective 22, and more precisely between the observation optical system 4 and the microscope objective 22.

In figure 2, the sample manipulating optical system 11 comprises a light source 9, a light scanning device 10, a beam-combiner 24, a beam-splitter 25, a first position detector 12 and a second position detector 13. The light source 9 emits a light beam 8 having a wavelength different from the wavelength of the incident optical beam 14 used for generating Raman scattering, for example at a wavelength comprised between 200 and 2200 nm. The light scanning device 10 comprises for example two galvanometric mirrors producing angular displacement of the optical beam 8 along two directions transverse to the optical axis of said optical beam 8. The beam combiner 24, a notch dichroic beam-splitter, reflects the sample manipulating light beam 8 toward the microscope objective 22. Simultaneously, the beam combiner 24 transmits the incident light beam 14 to the microscope objective 22. The microscope objective 22 focuses the sample manipulating light beam 8 in the fluidic sample. The scanning device 10 enables angular displacement of the optical beam 8 focused in the fluidic sample 1 within a sample manipulation area. The sample manipulation area is generally larger than the scanning area for Raman mapping. The scanning area of the sample manipulating light beam 8 usually covers the whole field of view in the observation image.

The scanning device 10 thus enables to direct the sample manipulating light beam 8 to a predetermined position within the fluidic sample 1, which is independent from the position of the incident light beam 14 in the fluidic sample.

The beam combiner 24 transmits a small part of the sample manipulating light beam 8 to a first position detector 12, which detects the reference position of the sample manipulating light beam 8 as a function of the position and/or orientation of the scanning device 10.

The beam combiners and/or beam splitters 24, 25, 27, 28 are transparent both for the incident light beam 14 and for the Raman scattered light beam 18.

The sample manipulating light beam 8 irradiates the fluidic sample. The microscope objective 22 focuses the sample manipulating light beam 8 at a second focusing point. Simultaneously, as explained above, the microscope objective 22 focuses the incident light beam 14 at a first focusing point inside the fluid sample 1 for generating a Raman scattered beam 18. However, the position of the first focusing point is controlled by the scanning device 16, while the position of the second focusing point is controlled by the scanning device 10. The positions of the first focusing point and of the second focusing point are thus independent from each other. When this second focusing point of the sample manipulating light 8 corresponds to the position of a selected particle 2, and when the wavelength of the sample manipulating light beam 8 is adapted for optically trapping said selected particle 2, the particle 3 remains at the focus of sample manipulating light beam 8. The sample manipulating light beam 8 thus enables to stabilize the position of a selected particle 2 within a fluid 30.

On the return beam path, the scattering and/or reflection of the sample manipulating light beam 8 on the fluidic sample generates a return light beam 31 which is collected by the microscope objective 22. The notch dichroic beam-splitter 25 reflects this return beam 31 toward a second position detector 13, while transmitting the Raman scattered beam 18 toward the scanning device 16, spectrometer 20 and detector 19. Preferably, the computer 21 comprises a signal processing system connected to the sample manipulating optical system 11. By comparing the position of return beam 31 on the second position detector 13 and the position of the sample manipulating light beam 8 on the first position detector 12, we analyse a reflection light of the sample manipulating light 8 reflected by the target microscopic particle 2. The sample manipulating light system 11 thus enables to detect an optically trapped particle 2, and to determine the position of the trapped particle, relatively to the position of the scanning device 10 of said sample manipulating light system 11. The sample manipulating light system 11 also enables to detect residual movements of a trapped particle, due for example to rotations of the particle.

Simultaneously, the observation system 4, with or without the illumination light, also enables to visualize the position of the sample manipulating light 8 within the field of view of the observation camera 5. The observation system 4 can thus be used to visualize a selected particle 2 and to control the scanning device 10 of the sample manipulating light beam 8 so that it is moved toward a selected particle 2 in order to trap said particle.

By using informations from the observation system 4, the target microscopic particle 2 is manipulated by a sample manipulating light 8 with a sample manipulating light scanning device 10 in a sample manipulating optical system 11 to trap the target microscopic particle 2 in a determined position. If necessary, the manipulating light 8 can move a selected particle so as to separate the selected particle from other particles present in the fluid. The sample manipulating light 8 is used for stabilizing a selected particle in a fixed position, by interrupting the movement of the scanning device 10.

While optically trapping the selected particle using the sample manipulating light 8, the optical micro-spectrometry system can perform a Raman spectrometry analysis of the trapped particle. To that end, the scanning system 10 of the sample manipulating light beam 8 moves the position of the second focusing point and/or the scanning system 16 of incident light beam 14 for generating Raman scattering moves the position of the first focusing point, so that the first focusing point and the second focusing point are merged at a position where a selected particle 2 is optically trapped.

The combined Raman microspectrometer and sample manipulating optical system 11 thus enables to obtain Raman spectra of a selected particle in a fluid, the selected particle being stabilized during Raman measurements. This stabilisation of a particle in a fluid enables more precise Raman measurements, with a higher signal to noise ratio, without extracting the selected particles from the surrounding fluid.

This combined technique applies in particular to living cells, which are not damaged by the sample manipulation light or by the Raman excitation light.

Depending on the type of microscopic objects to be analysed, the wavelength used for optical trapping might be different.

Preferably, the wavelength used for optical trapping is choosen such that absorption of this wavelength by the microscopic objects is optimal. This absorption generally depends on the nature of objects (type of material, class of molecules, etc...), on their structures, on their shapes and also on the surrounding media around those objects.

The power of Raman excitation light is adjusted by taking care of the damage against the objects, usually from a few microwatts up to a few watts. In comparison, the power of the optical trapping light is usually more than 100 mW then up to 10 W at sample, depending on the laser power density into the objects, samples (size, material, and single point trapping or multi-point trapping) and application.

The power of irradiation light is chosen such that it does not damage the samples by heating due to light absorption.

The optical filtering of the system is configured so that there are no interferences between the Raman signal 18 and the optical trapping (OT) light 8 or observation light 17. More precisely, between Raman signal 18 and OT light 8 : the light intensity of OT light 8 is relatively weak due to the filtering at filters 24 and 25. On the other hand, between OT light 8 and observation light 17, first, the OT light reflected by the fluidic sample is weakened by filters 24 and 25, and then an additional filter, such as a heat absorbance filter, may be placed in front of the video camera 5 for absorbing light at the wavelength of the OT light 8.

The system illustrated in figures 1-2 corresponds to a Raman backscattering configuration, wherein Raman scattered light is collected in the opposite direction to the direction of the excitation beam. In an alternative arrangement outside the scope of the claimed invention, the system is configured so as to collect forward scattered Raman light. The person skilled in the art will adapt the system disclosed in Fig. 1 to a forward scattering configuration with a similar sample manipulating system as disclosed in fig. 2.

In another alternative outside the scope of the claimed invention, the spectrometer 20 and detector 19 collect scattered light generated by fluorescence, depending on the sample features. In this case, the injection-rejection filter shall be replaced by a beam-splitter combined with colour filters.

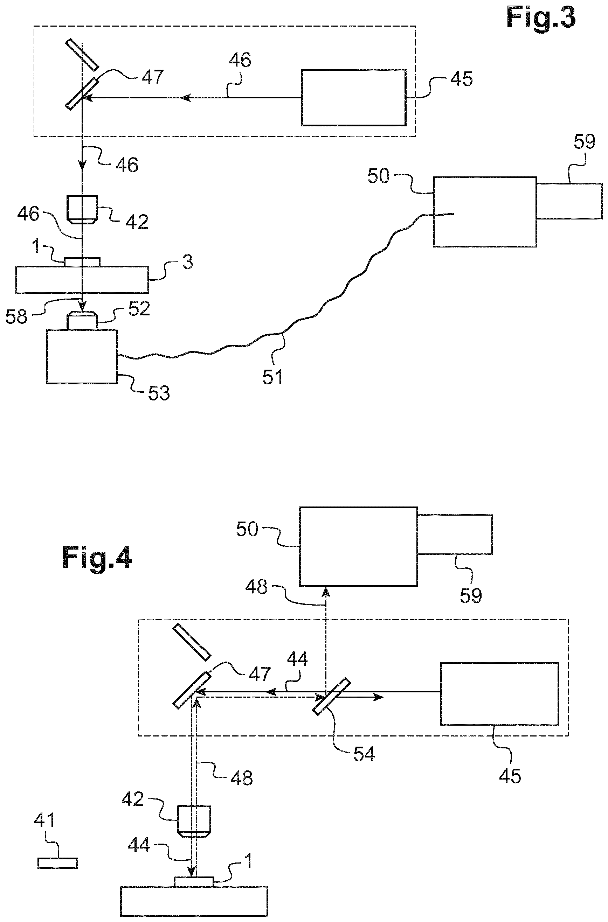

Figures 3 and 4 illustrate an optional transmission or absorption measurement module adapted for determining the appropriate wavelength of a sample manipulating light 8 for a specific microscopic particle. This transmission or absorption measurement module can also be used for measuring the spectral transmission or absorption of the fluidic sample.

Figure 3 illustrates an absorption measurement in transmission configuration. The transmission measurement module comprises a light source 45, a beam splitter-combiner 47, an incident microscope objective 42, a collection microscope objective 52 placed opposite to the sample stage with respect to the incident microscope objective 42, a signal receiver 53, an optical fiber 51 and a spectrometer 50 equipped with a detector 59. For transmission measurement, the sample stage 3 is adapted for being transparent over or in the spectral range of the light source 45. For example, the sample stage comprises a hole for transmission measurement.

The microscope objective 52 is configured to focus the optical tweezers light source onto the samples, and to focus the light beam for the measurements onto the samples.

The signal receiver 53 comprises a collecting optical system such as a lens or a microscope objective to collect the output signal (like the Raman signal) a rejection filter, such as an edge or notch filter, to reject the line of the light source, a filter to reject the line of the optical tweezers light source, and a focusing optical system to focus the output beam to the optical fiber 51.

The beam splitter-combiner 47 and incident microscope objective 42 of the transmission measurement module are preferably inserted in the confocal tube of a confocal microscope, for example between the sample manipulating system 11 and the sample stage 3.

The light source 45 emits a light beam 46, for example in the near ultraviolet, visible and/or near infrared ranges (NUV-VIS-NIR), and more specifically in the range comprised between 190 nm and 1100 nm. For example, the light source 45 is a wavelength tuneable light source, such as a tuneable laser or a set of individual lasers coupled by dichroic filters, or simply a fiber-coupled laser whose output port may be connected to different optical fibers so as to select the output wavelength.

The beam splitter-combiner 47 directs the light beam 46 toward the incident microscope objective 42 which focuses the light beam 46 onto the fluidic sample 1. A transmission beam 58 is formed by transmission of the light beam 46 through the fluidic sample 1 and the sample stage 3. The collection microscope objective 52 and the signal receiver 53 collect the transmission beam 58. The optical fiber 51 transfers the collected transmission beam 58 to the entrance of the spectrometer 50. The detector 59 thus detects the collected transmission beam 58 as a function of the wavelength.

When a selected particle is trapped using the sample manipulating optical system 11, the transmission measurement of the trapped particle is recorded. The absorbed wavelengths appearing in the transmission measurements are indicated for a better optical trapping.

Preferably, following this transmission measurement for a selected particle, the wavelength of the light beam 8 emitted by the light source 9 of the sample manipulating system 11 is tuned so as to provide a better trapping of the selected particle.

Figure 4 illustrates an absorption measurement in backscattering (reflection) configuration for a specific sample. The reflection measurement module comprises a light source 45, a beam splitter-combiner 47, a microscope objective 42, another beam splitter-combiner 54 and a spectrometer 50 equipped with a detector 59.

The reflection measurement module is preferably inserted in the confocal tube of a confocal microscope, for example between the sample manipulating system 11 and the fluidic sample 1.

The light source 45 emits a light beam 44, for example in the near ultraviolet, visible and/or near infrared ranges (NUV-VIS-NIR), and more specifically in the range comprised between 190 nm and 1100 nm. For example, the light source 45 is a wavelength tuneable light source, such as a tuneable laser.

The beam splitter-combiner 47 directs the light beam 44 toward the incident microscope objective 42 which focuses the light beam 44 onto the fluidic sample 1. A reflection beam 48 is formed by reflection of the light beam 44 onto the fluidic sample 1 and/or the sample stage 3. The microscope objective 42 collects the reflection beam 48. The beam splitter-combiner 54 transfers the collected reflection beam 48 to the entrance of the spectrometer 50. The detector 59 thus detects the collected reflection beam 48.

The absorbed wavelengths appearing in the reflection measurements are an indication for a better optical trapping.

According to an embodiment of the invention, following this NUV-VIS and/or NIR reflection measurement for a selected particle, the wavelength of the light beam 8 emitted by the light source 9 of the sample manipulating system 11 is tuned so as to provide a better trapping of the selected particle.

The micro-spectrometry system as disclosed in the present application is particularly suited for the observation of moving samples in liquid, for example biological samples, including living cells in solution. The movement of the particles in the liquid may be caused by the flow inside of the liquid or by the movement of living particles themselves.

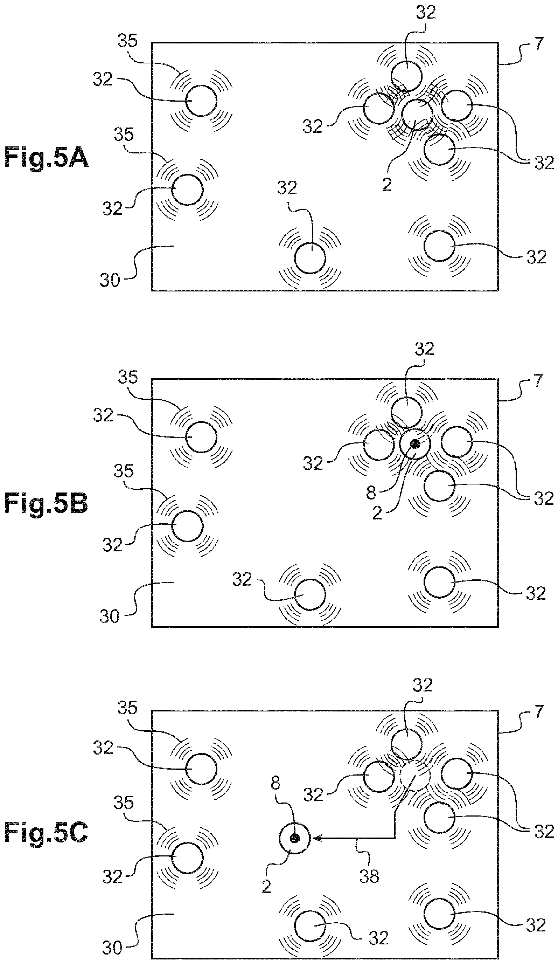

Figure 5A represents a top view of a fluidic sample as can be observed on an image 7 captured by the observation system 4. The fluidic sample comprises microscopic particles 2, 32 in a fluid 30. The movements of the microscopic particles 2, 32 are schematically illustrated by the lines 35. The movements 35 may be due to the flow in the fluid 30. The operator or a particle finder function combined to the observation system identifies a particle 2 to be analysed. For example, the particle finder and tracking function enables to determine in real time the exact position of the moving particles 2, 32 in the image of fig. 5A. However, the selected particle 2 is close to other particles 32. Due to the flow of surrounding fluid, these objects 2, 32 move, thus a spatially resolved mapping analysis of the fluidic sample is not easily feasible. For example in Raman mapping, the image of the fluidic sample is blurred by the movements of the different particles 2, 32.

Figure 5B shows the same fluidic sample as represented on fig. 5A, when directing a sample manipulating light beam 8 onto a selected particle 2. The sample manipulating light beam 8 can be precisely directed to the selected particle 2 based on the observation image of Fig. 5A, and/or based on particle finder and tracking functions. As a result, the sample manipulating light beam 8 traps the selected particle 2 that stops moving while remaining immersed in the surrounding fluid 30. However, the other particles 32 being away from the focus of the sample manipulating light beam 8 are still moving in the fluid 30. Thus, a Raman mapping image of fig. 5B would still be blurred by the movements of the other particles 32.

Figure 5C illustrates the displacement of said selected particle 2 using the sample manipulating light beam 8. The light beam 8 is moved to an area of the fluidic sample so as to separate the selected particle 2 from other microscopic particles 32 that are still moving. The arrow 38 represents the migration pathway of the trapped particle 2 using the sample manipulating light beam 8. Using the observation image, the trapped particle 2 can be moved inside the fluid to an area where the selected particle 2 is spatially separated from the other particles 32. The selected particle 2 remains in the focus of the sample manipulating light beam 8, and remains stabilized. As a result, a Raman mapping image of fig. 5C enables to form an image of the selected particle 2 that is immobilized during the Raman measurement, and that is not blurred around the selected particle 2 despite the movements of the other particles 32 in the fluid 30. Alternatively, the incident light beam 14 can be moved to the exact position of the selected particle 2, in order to perform Raman measurement of the selected particle 2 which is immobilized by the sample manipulating light beam 8.

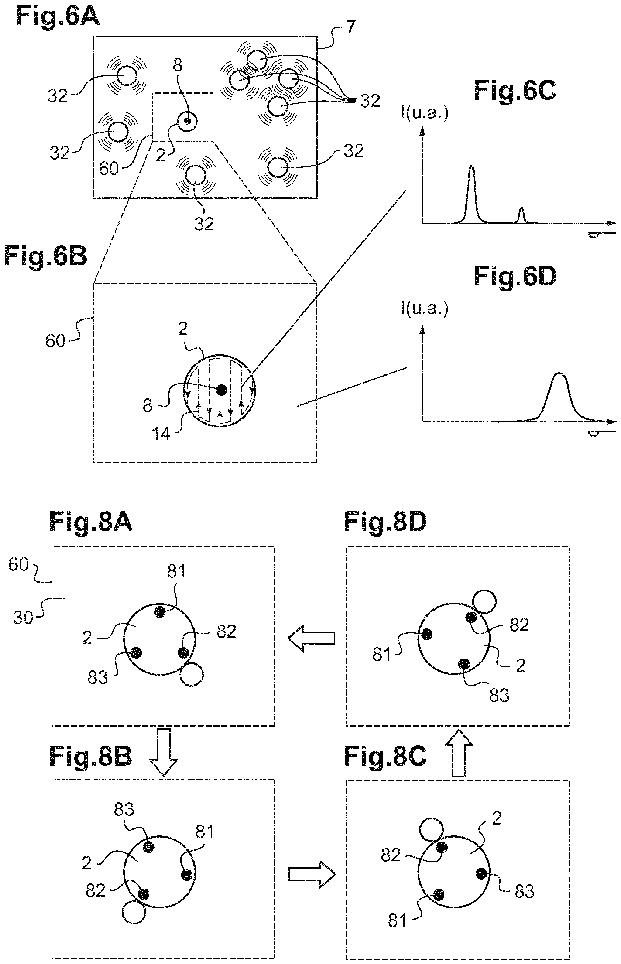

More precisely, as disclosed on Figures 6A and 6B, the Raman mapping is preferably performed within a limited area 60 of the fluidic sample, and preferably limited to the area of a trapped selected particle 2. Fig 6A represents a top view of a fluidic sample comprising microscopic particles 32 in a fluid 30 and a selected particle 2 which is optically trapped using the sample manipulating light beam 8, similar to that of fig. 5C, the selected particle 2 being spatially separated from the other particles 32 in the fluid 30. Fig. 6A represents the field of view 7 of an observation image captured by the observation system 4. An image recognition system, such as particle finder software, enables to recognize the respective positions and shapes of each of the particles 2 and 32 within the field of view 7 of the imaging system. In particular, the image recognition system identifies the position and shape of a particle 2 which is trapped by a sample manipulating light beam 8. The trapped particle 2 is immobilized in the fluid.

The enlarged view 6B represents a maximum scanning beam area 60 for scanning the incident light beam 14 for micro-spectrometric analysis. The Raman excitation beam 14 is scanned using scanning system 16 for example following a zig-zag path on the fluidic sample. In a preferred embodiment, the controller 21 is adapted and configured for scanning the Raman excitation beam 14 on a limited area, for example mapping is limited only to the area inside the selected particle 2, knowing the position and the shape of the selected particle 2 which is optically trapped (see Fig. 6B). Raman spectra are recorded at a plurality of acquisition points corresponding to different positions of the Raman excitation beam 14. The mapping image thus obtained enables to determine the Raman intensity spectra as a function of wavenumber corresponding to the selected particle 2 as displayed on fig. 6C. A Raman spectra corresponding respectively to the surrounding fluid as displayed on fig. 6D. This method enables to reduce the number of measurement points, which means to reduce the mapping time. In another example, mapping can be performed over the maximum scanning beam area 60.

The device and method of the invention thus enables to analyse precisely, and rapidly a selected particle 2 immersed in a fluid 30.

However, the size of the focused sample manipulating light beam 8 should be adapted, depending on the size of the particle to be trapped. The microscope objective can be changed for changing its magnification, thus changing the size of the waist of the sample manipulating light beam 8.

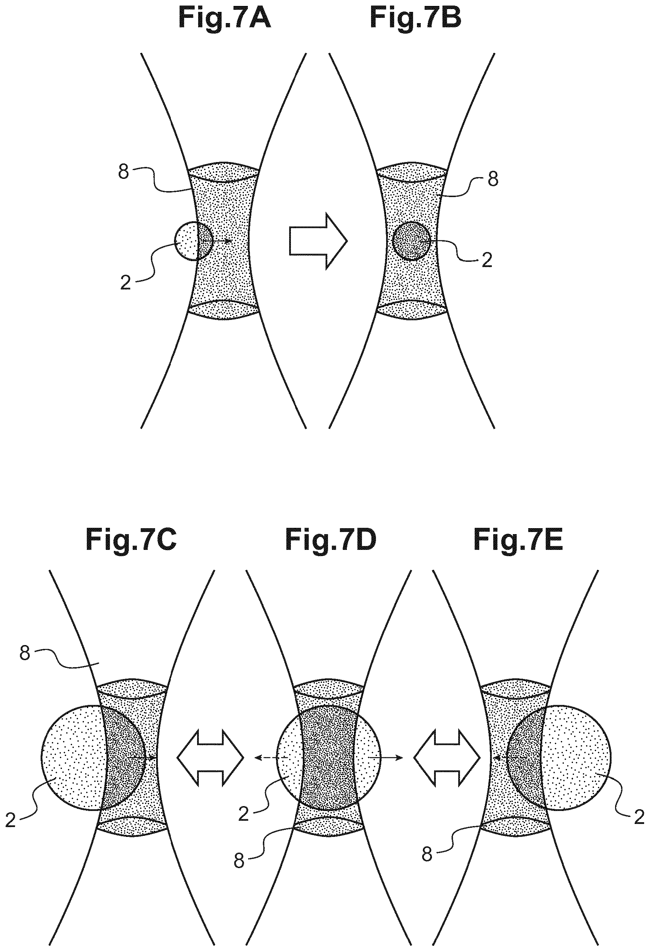

Figures 7A and 7B represent optical trapping of a small size microscopic object by a sample manipulating light beam 8.

Figures 7C to 7E illustrate optical trapping of a relatively large microscopic object by a sample manipulating light beam 8.

Figures 8A to 8D illustrate tracking of a microscopic object. In this variant, the sample manipulating light beam is spatially separated into three focusing points, the positions of which are controlled for changing the orientation of a trapped particle.

### Method

One example of a method implementing the invention is detailed as follows.

First, a fluidic sample 1, which includes a target microscopic particle 2 in a fluid, preferably in a liquid 30, is set on a sample stage 3. The sample 1 is visualized by an observation optical system 4 including an observation camera 5 and an illuminator 6. The target microscopic particle 2 is displayed in a field of view 7 of the observation camera 5.

Advantageously, an image recognition function, such as a particle finder function, automatically recognizes the target microscopic particle 2. The image recognition function in the software provides information about the target position, by image processing of the observation image. The controller 21 is connected to a sample manipulating optical system 11 comprising a sample manipulating light 8 and a sample manipulating light scanning device 10. By using the informations of position and/or shape of the target microscopic particle 2, the sample manipulating optical system 11 is used to trap the target microscopic particle 2 in a certain position so that it does not move during a micro-spectrometry analysis, such as Raman spectrometry.

The sample manipulating light 8 can be used to drag the target microscopic particle 2 in a viscous fluid. The displacement of the target microscopic particle 2 can be controlled by using the position information from a first position sensor 12 and/or from a second position sensor 13. The first position sensor 12 and/or the second position sensor 13 enable to analyse the movements of a target microscopic particle 2 or molecule due to the flow in the fluid, or due to the movements of a particle such as a molecule or living cell itself. For example, the second position sensor 13 detects a reflected light generated by reflection of the sample manipulating light 8 on the target microscopic particle 2. The controller 21 may for example compare the respective positions of the sample manipulating light 8 on the second position sensor 13 and on the first position sensor 12.

The optical micro-spectrometry system comprises a Raman microspectrometer coupled with a scanning system for collecting Raman mapping measurement of the fluidic sample. The target particle being trapped by sample manipulating light 8, optical Raman spectrometry analysis can be performed simultaneously on the target microscopic particle 2. To do that, an incident light 14 emitted from light source 15 is irradiated to the target microscopic particle 2, and the incident beam 14 is scanned around or inside the target microscopic particle 2 by using an incident light scanning system 16 and/or a return light scanning system.

Raman backscattered light 18 is collected by a microscope objective 22, transferred to the input of a spectrometer 20, and to the output detector 19 for detecting the Raman scattered light as a function of wavelength or as a function of wavenumber. The mapping result is displayed on a computer 21 to analyze the result quantitatively and/or qualitatively.

During the mapping measurement, the target microscopic particle 2 is trapped stably by using the sample manipulating light 8. Residual fluctuations of the target microscopic particle 2 is possible while keeping the spot of the sample manipulating light 8 at a fixed position, because of the size of the target microscopic particle 2. For example, a particle may have rotation inducing small displacements.

The multi-points trapping configuration enables to correct displacements and/or rotations of the simultaneously trapped objects. For example, an image recognition system is used for enabling to find a particle in an observation image 21 and for tracking said particle in the observation image 21. Object tracking (or particle tracking) is used to analyse the behaviour of the object inside of the liquid/solution/medium. Object tracking enables to monitor the behaviour of an object, for example to watch the biological sample reaction upon exposure to some chemical material. And this result is transferred to the mapping driving devices such as the incident light scanning system 16 or the return light scanning system in order to correct the displacement/rotation of the target microscopic particle 2 during the measurement. For example, a particle tracking algorithm such as well-known techniques based on the analysis of the video image, for example Rosin and/or Otsu, can be used.

We describe below in detail an optical micro-spectrometry method for analysing a microscopic particle in a fluidic sample, said optical micro-spectrometry method comprising the following steps:
a) placing a fluidic sample on a sample stage adapted for receiving said fluidic sample comprising a fluid and microscopic particles immersed in said fluid;
b) Select the low magnification of a microscope objective, and approach the microscope objective into the sample to do focusing by seeing an observation image of the sample on the video display.
c) Switch the microscope objective to the objective which is for the measurement, and by seeing the observation image, do the focus on the sample surface.
d) Try to find the measured sample in the field of view in the observation image.
e) If the wavelength of the OT light source adapted for trapping the sample is unknown, go to the process step (f). If the wavelength of the light source adapted to trap the sample is known, go to the process step (g).
f) To find the wavelength of the light source adapted for trapping the sample, an absorbance measurement is performed. To do that, the configuration of the absorption measurement is prepared. By measuring the wavelength absorbed by the sample, the wavelength of the light source adapted for OT which corresponds to the lowest absorption of said the sample is determined.
g) The OT light source is turn on. Then the sample is tweezed by this OT light beam to displace the sample position from somewhere in the field of view to around the centre of the field of view to measure the spectra or to do the mapping measurement.
h) By using the observation image, and an automated Particle Finder function, the exact area of the sample in the observation image is determined. For example, by using an intensity threshold of the images, or by using the matrix calculation to do the filtering to enhance only the edge of the sample which would have a higher contrast than the other area. Either, this function provides information about the size and/or shape of the sample as additional sample information.
i) By using the observation image and a Particle Finder function, the sample position can be tracked as a function of the time, as additional information. If the sample goes away, then with OT, the sample can be returned to its original position.
j) By using the observation image, OT, and position sensors, the Brownian motion of the trapped microscopic particle can be monitored as additional sample information.
k) Turn on the light beam for the spectrum acquisition. If the measurement condition is unknown, a single spectrum acquisition is acquired to enable adjusting the measurement condition while keeping the position of the sample tweezed by OT at the same position of the light beam spot for the measurement.
l) After adjusting the measurement condition, mapping measurement can be performed, by using the mapping area recognized by Particle Finder as a sample location. The mapping can be partially limited to the area surrounding the trapped sample or to the trapped sample area so as to reduce the total mapping time. During mapping, a scanning device can be used to scan the light beam and output beam from the sample without moving the sample position by using motorized XY stage, which could induce a flow of the liquid/medium around the sample. With this mapping measurement result, the distribution of the spectroscopic information in the sample can be evaluated.

Combined OT and microspectrometry measurement can be performed on an upright microscope configuration or an inverted microscope configuration. The spectroscopic measurement can be performed using a reflection configuration (backscattering configuration) and/or transmission configuration. Micro-spectrometry measurements can be of the type Raman spectroscopy, Fluorescence spectroscopy, Fluorescence or phosphorescence Lifetime measurement.

In another particular embodiment, an optical light modulator such as an acousto-optic deflector (AOD) or spatial light modulator (SLM) is placed on the optical beam path of the sample manipulating light 8 so as to generate a light pattern having a plurality of focus points in the focal plane of the microscope objective 22. This optical light modulation enables to create a plurality of virtual manipulating images of a single light source 9. This enables manipulating several microscopic particles simultaneously at different places in the fluidic sample.

We describe below a process for multi-points Optical trapping and simultaneous microspectroscopy.

According to a particular embodiment, an optical micro-spectrometry method for analysing microscopic particles in a fluidic sample, said optical micro-spectrometry method comprising the following steps:
m) placing a fluidic sample on a sample stage adapted for receiving said fluidic sample comprising a fluid 30 and microscopic particles immersed in said fluid;
n) Selecting the low magnification of a microscope objective, and approach the microscope objective into the sample to do focusing by seeing an observation image of the sample on the video display;
o) Switch the microscope objective to the objective which is for the measurement, and by seeing the observation image, do the focus on the sample surface.
p) Try to find the target microscopic object 2 to be measured in the field of view 60 in the observation image;
q) If the wavelength adapted for optical trapping of said target object is unknown, then step (r) should be performed. If the wavelength of the light source to trap the sample is known, go to the process step (s).
r) To find the wavelength of the light source adapted for trapping the sample, an absorbance measurement is performed. To do that, the configuration of the apparatus is adapted for absorption measurement. By measuring the absorption wavelength by the sample, the wavelength of the light source which is adapted for OT is chosen as the wavelength corresponding to the lowest absorption of said microscopic object.
s) By using the observation image and for example an automated Particle Finder function, the exact area of the sample in the observation image is determined. For example, by using an intensity threshold of the images, or by using the matrix calculation to do the filtering to enhance only the edge of the sample which would have a higher contrast than the other area. Either, this function provides information about the size and/or shape of the objects as additional sample information.
t) With the information derived from process step s), the operator determines which object is selected for trapping using Multi-points OT on the software. Once a selected object 2 is chosen, the OT light source is turned on. Then with multi-point OT, a plurality of microscopic objects in the sample can be trapped at the same time in the field of view. To perform multi-points OT, a scanning device for OT light source such as an AOD (Acousto-Optic Deflector), or a SLM (Spatial Light Modulator) is used preferably.
u) By using the observation image and "Particle Finder", the position of a selected sample can be tracked in function of the time as additional information. If the selected sample drifts, then with using OT, the selected microscopic objects can be returned to its original position.
v) By using the observation image, OT, and position sensors, the Brownian motion of a selected microscopic object can be monitored as additional sample information.
w) OT light source is turned ON. Then the first sample is tweezed by this OT light source to displace the position from somewhere in the field of view to around the centre of the field of view.
x) Turn on the microspectrometry light beam for the spectrum acquisition. If measurement condition is unknown, a single spectrum acquisition is acquired to enable adjusting the measurement condition while keeping the position of the sample tweezed by OT at the same position of the light beam spot for the measurement.
y) After adjusting the measurement condition, for mapping measurement, the mapping area recognized by Particle Finder as a sample location, enables to perform mapping of a spatially limited area around the target particle, in order to reduce the total mapping time. By using multi-points OT, mapping for all of the selected microscopic objects can be performed by displacing the sample position from one to the other step by step, either by respecting the sample size/shape from Particle Finder. During mapping, a second scanning device can be used to scan the light beam and output beam from the sample without moving the sample position by using motorized XY stage, which could make the flow of the liquid/medium around the sample. With this mapping measurement result, the distribution of the spectroscopic information in the sample can be evaluated.

Figures 8A to 8D illustrate an example of multi-point optical trapping and manipulation of a particle for changing the orientation of the trapped particle. The sample manipulating light beam 8 from a light source 9 is spatially modulated using an acousto-optic deflector (AOD) or spatial light modulator (SLM) inserted between the light source 9 and the scanning device 10. The acousto-optic deflector (AOD) or spatial light modulator (SLM) is adapted so as to separate the sample manipulating light beam 8 in a plurality of light beams. The microscope objective focuses these light beams at a plurality of focusing points, for example at three focusing points 81, 82, 83 (see Fig. 8A). The focusing points 81, 82, 83 of the sample manipulating light beam 8 can be directed to a same selected particle 2. Single focusing point optical trapping prevents a trapped particle from drifting laterally but does not prevent the trapped particle from rotating around the single focusing point. When the respective positions of the multiple focusing points 81, 82, 83 are fixed, the trapped selected particle 2 cannot move or rotate. Multiple focusing points on a selected particle thus enable more stable optical trapping. Alternatively, moving and/or rotating the positions of the multiple focusing points 81, 82, 83 can be used to rotate selected particle 2 around itself. For example, the relative distances between focusing points 81, 82, 83 are fixed, but the positions of these focusing points 81, 82, 83 are rotated clockwise when changing from fig. 8A to Fig. 8B, 8C and 8D. This rotation of the focusing points 81, 82, 83 enables to control the rotation of the selected trapped particle 2.

Multipoint optical trapping can be used to trap simultaneously a plurality of selected particles at different positions in the field of view of the observation image. The positions of the trapped selected particles can be determined using a particle finder. The incident light beam 14 is then focused at each position of said selected particles, so as to acquire spectrometric measurements of said trapped particles. The measurement time is considerably reduced while increasing signal-to-noise ratio. Alternatively, the mapping can be performed over a mapping area delimited by the positions of the selected trapped particles.

In an example of application, multipoint optical trapping is used in combination with polarized Raman measurements, using a linear polarizer 70 and/or linear analyser 71. This configuration enables to analyse the Raman spectrometry measurements as a function of the orientation of the selected particle and as a function of the polarization state of the incident light beam and/or of the Raman scattered light beam.

Such micro-spectrometry measurements can be obtained with an upright microscope configuration or an inverted microscope configuration.

Many variants of the invention are possible within the scope of the appended claims.

The invention finds applications in particular for analysing biological samples in fluids.

## Claims

1. An optical micro-spectrometry system for analysing microscopic objects in a fluidic sample, said optical micro-spectrometry system comprising:
- a sample stage (3) adapted for receiving a fluidic sample (1) comprising a fluid (30) and microscopic objects (2, 32) immersed in said fluid (30) ;
- a Raman excitation laser (15) adapted for irradiating a Raman excitation laser light beam (14) ;
- a microscope objective (22) for focusing the Raman excitation laser light beam (14) at a first focusing point within said fluidic sample (1);
- an optical system (22) for collecting an output light beam (18) emitted by the fluidic sample (1) as a result of scattering of said Raman excitation laser light beam (14) irradiating on the fluidic sample (1) ;
- an injection-rejection filter (23) adapted for directing said Raman excitation laser light beam (14) along an optical beam path toward said microscope objective (22), the injection-rejection filter (23) being adapted for receiving the output beam (18) resulting from scattering of said Raman excitation laser light beam (14) by the fluidic sample (1) and collected by said optical system (22), and said injection-rejection filter (23) being adapted for separating elastically scattered light and inelastically scattered light from said output beam (18) ;
- a Raman spectrometer (20) equipped with a detector (19) for detecting said inelastically scattered light separated from said output light beam (18) by the injection-rejection filter (23) as a function of wavelength and for measuring Raman spectra;
- a first scanning device (16), said first scanning device (16) being placed in the optical beam path of said Raman excitation laser light beam (14) between the injection-rejection filter (23) and the microscope objective (22), for displacing the first focusing point of said Raman excitation laser light beam (14) across a first scanning area in said fluidic sample (1) ;
- an optical tweezers light source (9) adapted for emitting an optical tweezers light beam (8) ;
- an optical beam combiner (24) consisting of a notch dichroic beam-splitter, inserted in the optical path between the first scanning device (16) and the microscope objective (22), the optical beam combiner (24) being adapted for receiving said Raman excitation laser light beam (14) and said optical tweezers light beam (8) and for directing simultaneously said Raman excitation laser light beam and said optical tweezers light beam through said microscope objective (22) so as to focus simultaneously the Raman excitation laser light beam at said first focusing point and respectively the optical tweezers light beam at a second focusing point in said fluidic sample (1), the notch dichroic beam-splitter reflecting the optical tweezers light beam (8) toward the microscope objective (22) and, simultaneously, the notch dichroic beam-splitter transmitting the Raman excitation laser light beam (14) to the microscope objective (22),
- a second scanning device (10) inserted in an optical tweezers beam path between the optical tweezers light source (9) and the optical beam combiner (24), said second scanning device (10) being adapted for displacing the optical tweezers light beam (8) in the plane whereon the fluidic sample lies, so as to trap optically at least one selected microscopic object (2) in said fluidic sample (1) within the first scanning area and/or to move said at least one selected microscopic object (2) optically trapped in said fluidic sample (1) toward the first scanning area,
- a first position detector (12) placed in an optical beam path of the optical tweezers light beam (8), the optical beam combiner (24) being placed between the optical tweezers light source (9) and the first position detector (12), the optical beam combiner (24) transmitting a part of the optical tweezers light beam (8) to the first position detector (12), and said first position detector (12) being adapted for detecting a position or a movement of said optical tweezers light beam (8) incident onto said fluidic sample (1), and
- a second notch dichroic beam-splitter (25) and a second position detector (13), the second notch dichroic beam-splitter (25) being placed between the optical beam combiner (24) and the first scanning device (16) in an optical beam path of a reflected beam formed by reflection of said optical tweezers light beam (8) on said fluidic sample, said second notch dichroic beam-splitter (25) and said second position detector (13) being adapted for detecting a position or a movement of said reflected beam after reflection on said fluidic sample (1), and said second notch dichroic beam-splitter (25) transmitting the Raman scattered beam (18) toward the Raman spectrometer (20).

2. An optical micro-spectrometry system according to claim 1 further comprising a confocal aperture placed in the optical path of the output light beam (18) in a plane optically conjugate with a plane inside said fluidic sample, said confocal aperture being adapted for selecting an output area in said fluidic sample (1).

3. An optical micro-spectrometry system according to claim 1 or claim 2 wherein the first scanning device (16) is placed in the optical path of the output light beam (18) and said first scanning device (16) is adapted for displacing an optical axis of said output light beam across an output scanning area in said fluidic sample.

4. An optical micro-spectrometry system according to any one of claims 1 to 3 further comprising an observation system (4) inserted into the optical beam path of said Raman excitation laser light beam (14) between the first scanning device (16) and the optical beam combiner (24), said observation system (4) comprising :
- an illumination system (6, 27) adapted for generating an illumination light beam (17) combined with said Raman excitation laser light beam (14) ;
- an imaging system (28, 5) adapted for forming an observation image formed by reflection and/or scattering of said illumination light beam (17) on said fluidic sample ; and
- an image recognition system adapted for detecting a position and/or a shape of at least one selected microscopic object (2) in said observation image.

5. An optical micro-spectrometry system according to claim 4 further comprising a controller system (21) adapted for driving said second scanning device (10) so as to move the optical tweezers light beam (8) which is trapping said at least one selected microscopic object (2) and so as to move said at least one selected microscopic object (2) along a migration path (38) toward a predetermined position.

6. An optical micro-spectrometry system according to claim 5 further comprising a polarizer (70) adapted for selecting a polarization state of said Raman excitation laser light beam (14) and/or an analyzer (71) adapted for selecting a polarization state of said output light beam (18, 48, 58).

7. An optical micro-spectrometry system according to any one of claims 1 to 6 further comprising :
- another light source (45) adapted for emitting an input light beam (44), preferably having a tuneable wavelength in the ultraviolet, visible and/or near infrared range ;
- an optical beam combiner (47) for directing said input light beam (44) through said microscope objective (22, 42) onto said fluidic sample ;
- said microscope objective (22, 42) being adapted for collecting an output reflected beam (48) generated by reflection of said input light beam (44) on said fluidic sample (1) ;
- a spectrometer (50) equipped with a detector (59) ;
- a beam splitter (54) arranged on a beam path of said input light beam (44) and said output reflected beam (48), said beam splitter (54) being adapted for directing said output reflected beam (48) onto the spectrometer (50) equipped with the detector (59).

8. An optical micro-spectrometry system according to any one of claims 1 to 6 further comprising :
- another light source (45) adapted for emitting an input light beam (46), preferably having a tuneable wavelength in the ultraviolet, visible and/or near infrared range ;
- an optical beam combiner (47) for directing said input light beam (46) through said microscope objective (22, 42) onto said fluidic sample ;
- the sample stage (3) being transparent in the spectral range of said input light beam (44)
- another microscope objective (52) being adapted for collecting an output transmitted beam (58) generated by transmission of said input light beam (46) through said fluidic sample (1) ;
- a spectrometer (50) equipped with a detector (59) ;
- an optical system (53, 51) for directing said output transmitted beam (58) onto the spectrometer (50) equipped with the detector (59).

9. An optical micro-spectrometry system according to any one of claims 7 or 8 wherein said input light beam (44, 46) is a broad spectral range light beam (44, 46), and wherein the output reflected beam (48) or the output transmitted beam (58) is measured as a function of the wavelength, so as to determine by reflection or absorption measurements an appropriate wavelength in the ultraviolet, visible and/or near infrared range adapted for optically trapping said at least one selected microscopic object (2) in said fluidic sample (1).

10. An optical micro-spectrometry system according to any one of claims 1 to 9 wherein said microscope objective (22) is a reflecting-type microscope objective, preferably a Cassegrain objective.

11. An optical micro-spectrometry method for analysing microscopic objects in a fluidic sample, said optical micro-spectrometry method comprising the following steps:
- providing an optical micro-spectrometry system according to any one of claims 1 to 10;
- placing a fluidic sample (1) on the sample stage (3) adapted for receiving said fluidic sample (1) comprising a fluid (30) and microscopic objects (2, 32) immersed in said fluid (30) ;
- placing the microscope objective (22) and adjusting focusing on the fluidic sample (1) by using an observation image of the sample on a video image display ;
- identifying at least one selected microscopic object (2) in the field of view of the observation image of the fluidic sample (1) ;
- emitting an optical tweezers light beam (8) from the optical tweezers light source (9) ;
- directing the optical tweezers light beam (8) on the notch dichroic beam-splitter (24),
- displacing the optical tweezers light beam (8) in the plane whereon the fluidic sample lies using the second scanning system, so as to trap optically said at least one selected microscopic object (2) in said fluidic sample (1) and/or to move said at least one selected microscopic object (2) optically trapped in said fluidic sample (1) within the field of view of the observation image ;
- emitting a Raman excitation laser light beam (14) from the Raman excitation laser (15);
- directing the Raman excitation laser light beam (14) on the injection-rejection filter (23) arranged between the Raman excitation laser (15) and the notch dichroic beam-splitter (24) ;
- optically combining said optical tweezers light beam (8) and said Raman excitation laser light beam (14) using the notch dichroic beam-splitter (24), so as to focus simultaneously said optical tweezers light beam (8) and said Raman excitation laser light beam (14) through said microscope objective (22) onto said at least one selected microscopic object (2) ;
- using the first scanning device (16) placed in the optical beam path of said Raman excitation laser light beam (14) between the injection-rejection filter (23) and the notch dichroic beam-splitter (24) for displacing the first focusing point of said excitation laser light beam (14) across a first scanning area in said fluidic sample (1) ;
- collecting an output light beam (18) resulting from scattering of said Raman excitation laser light beam (14) by said at least one selected microscopic object (2)
- receiving the collected output beam (18) on the injection-rejection filter (23) and separating elastically scattered light and inelastically scattered light from said output beam (18),
- detecting said separated inelastically scattered light as a function of wavelength and measuring Raman spectra from the inelastically scattered light.

12. An optical micro-spectrometry method for analysing microscopic objects in a fluidic sample according to claim 11 further comprising the following steps :
- forming an observation image by reflection and/or scattering of an illumination light beam (17) on said fluidic sample, and
- analysing said observation image using a particle finder system adapted for determining the position and/or shape of at least one selected microscopic object (2) in said observation image ;
- measuring a reflected light beam (31) generated by scattering and/or reflection of the optical tweezers light beam (8) on the fluidic sample ;
- monitoring changes of said measured reflected light beam (31) as a function of displacement of said selected microscopic object (2), so as to analyze Brownian motion of said selected microscopic object (2) ;
- adapting a spectral mapping by using the sample position and/or shape information analyzed by the particle finder system so as to reduce the total measurement time.

13. An optical micro-spectrometry method for analysing microscopic objects in a fluidic sample, according to claim 11 or 12 wherein :
- the step of identifying at least one selected microscopic object (2) in the field of view of the observation image of the fluidic sample (1) comprises using a particle finder system for recognition of the positions of a plurality of selected microscopic objects (2) ;
- the step of emitting an optical tweezers light beam (8) further comprises a step of using a scanning device, such as an acousto-optic modulator or a spatial light modulator for generating a light pattern having a plurality of focusing points in the focal plane of the microscope objective (22) so as to optically trap simultaneously said plurality of selected microscopic objects (2) ;
and comprising the steps of:
- determining a limited mapping area (60) from said positions of said plurality of selected microscopic objects (2) ;
- using the first scanning system (16) for scanning the Raman excitation laser light beam and the output light beam (18) for acquisition of Raman spectrometric measurements inside said limited mapping area (60) and/or inside said positions of said plurality of selected microscopic objects (2).

14. An optical micro-spectrometry method for analysing microscopic objects in a fluidic sample according to claim 12 or 13 further comprising the following step :
- monitoring the migration path (38) of said at least one selected microscopic object (2) using an image processing system adapted for particle tracking in said observation image.

## Patentansprüche

1. Optisches Mikrospektrometriesystem zur Analyse von mikroskopischen Objekten in einer Fluidprobe, wobei das optische Mikrospektrometriesystem
- einen Probenträger (3), der zum Aufnehmen einer ein Fluid (30) und im Fluid (30) eingetauchte mikroskopische Objekte (2, 32) aufweisenden Fluidprobe (1) ausgelegt ist,
- einen Raman-Anregungslaser (15), der zum Abstrahlen eines Raman-Anregungslaserlichtstrahls (14) ausgelegt ist,
- ein Mikroskopobjektiv (22) zum Fokussieren des Raman-Anregungslaserlichtstrahls (14) auf einen ersten Fokussierpunkt in der Fluidprobe (1),
- ein optisches System (22) zum Sammeln eines von der Fluidprobe (1) als Ergebnis der Streuung des auf die Fluidprobe (1) strahlenden Raman-Anregungslaserlichtstrahls (14) abgegebenen Austrittslichtstrahls (18),
- ein Durchlaß-/Sperr-Filter (23), das dazu ausgelegt ist, den Raman-Anregungslaserlichtstrahl (14) entlang eines optischen Strahlenwegs zum Mikroskopobjektiv (22) zu führen,
wobei das Durchlaß-/Sperr-Filter (23) zum Empfangen des aus der Streuung des Raman-Anregungslaserlichtstrahls (14) durch die Fluidprobe (1) resultierenden und durch das optische System (22) gesammelten Austrittsstrahls (18) ausgelegt ist, und wobei das Durchlaß-/Sperr-Filter (23) dazu ausgelegt ist, elastisch gestreutes Licht und unelastisch gestreutes Licht vom Austrittsstrahl (18) zu trennen,
- ein Raman-Spektrometer (20), das mit einem Detektor (19) zum Erfassen des durch das Durchlaß-/Sperr-Filter (23) in Abhängigkeit von der Wellenlänge vom Austrittslichtstrahl (18) getrennten nichtelastisch gestreuten Lichts und zum Messen von Raman-Spektren ausgestattet ist,
- eine erste Abtastvorrichtung (16), wobei die Abtastvorrichtung (16) auf dem Weg des optischen Strahls des Raman-Anregungslaserlichtstrahls (14) zwischen dem Durchlaß-/Sperr-Filter (23) und dem Mikroskopobjektiv (22) angeordnet ist, um den ersten Brennpunkt des Raman-Anregungslaserlichtstrahls (14) durch ein erstes Abtastgebiet in der Fluidprobe (1) zu bewegen,
- eine Lichtpinzettenlichtquelle (9), die zum Abstrahlen eines Lichtpinzettenlichtstrahls (8) ausgelegt ist,
- einen optischen Strahlkombinierer (24), der aus einem kerbdichroitischen Strahlteiler besteht, der in den optischen Weg zwischen der ersten Abtastvorrichtung (16) und dem Mikroskopobjektiv (22) eingefügt ist, wobei der optische Strahlenkombinierer (24) dazu ausgelegt ist, den Raman-Anregungslaserlichtstrahl (14) und den Lichtpinzettenlichtstrahl (8) zu empfangen und den Raman-Anregungslaserlichtstrahl und den Lichtpinzettenlichtstrahl gleichzeitig durch das Mikroskopobjektiv (22) zu führen, um gleichzeitig den Raman-Anregungslaserlichtstrahl (14) auf den ersten Fokussierpunkt und den Lichtpinzettenlichtstrahl (8) auf einen zweiten Fokussierpunkt in der Fluidprobe zu fokussieren, wobei der kerbdichroitische Strahlteiler den Lichtpinzettenlichtstrahl (8) zum Mikroskopobjektiv (22) reflektiert und gleichzeitig der kerbdichroitische Strahlteiler den Raman-Anregungslaserlichtstrahl (14) zum Mikroskopobjektiv (22 überträgt,
- eine zweite Abtastvorrichtung (10), die in einen Lichtpinzettenlichtstrahlweg zwischen der Lichtpinzettenlichtquelle (9) und dem optischen Strahlkombinierer (24) eingefügt ist, wobei die zweite Abtastvorrichtung (10) dazu ausgelegt ist, den Lichtpinzettenlichtstrahl (8) auf die Ebene zu verlegen, auf der die Fluidprobe liegt, um optisch wenigstens ein ausgewähltes mikroskopisches Objekt (2) in der Fluidprobe (1) im ersten Abtastbereich einzufangen und/oder das wenigstens eine in der Fluidprobe (1) optisch eingefangene ausgewählte mikroskopische Objekt (2) in den ersten Abtastbereich zu bewegen,
- einen in einen optischen Strahlenweg des Lichtpinzettenlichtstrahls (8) eingefügten ersten Positionsdetektor (12), wobei der optische Strahlenkombinierer zwischen der Lichtpinzettenlichtquelle (9) und dem ersten Positionsdetektor (12) angeordnet ist, wobei der optische Strahlenkombinierer (24) einen Teil des Lichtpinzettenlichtstrahls (8) zum ersten Positionsdetektor (12) überträgt, und wobei der erste Positionsdetektor (12) dazu ausgelegt ist, eine Position oder eine Bewegung des auf die Fluidprobe (1) einfallenden Lichtpinzettenlichtstrahls (8) zu erfassen, und
- einen zweiten kerbdichroitischen Strahlteiler (25) und einen zweiten Positionsdetektor (13), wobei der zweite kerbdichroitische Strahlteiler (25) zwischen dem optischen Strahlenkombinierer (24) und der ersten Abtastvorrichtung (16) in einem optischen Strahlenweg eines reflektierten Strahls angeordnet ist, der durch Reflexion des Lichtpinzettenlichtstrahls (8) an der Fluidprobe (1) gebildet worden ist, wobei der zweite kerbdichroitische Strahlteiler (25) und der zweite Positionsdetektor (13) dazu ausgelegt sind, eine Position oder eine Bewegung des reflektierten Strahls nach der Reflexion an der Fluidprobe (1) zu erfassen, und wobei der zweite kerbdichroitische Strahlteiler (25) den gestreuten Raman-Strahl (18) zum Raman-Spektrometer (20) überträgt,
aufweist.

2. Optisches Mikrospektrometriesystem gemäß Anspruch 1, das außerdem eine konfokale Blende aufweist, die im optischen Weg des Austrittslichtstrahls (18) in einer Ebene angeordnet ist, die einer Ebene innerhalb der Fluidprobe optisch zugeordnet ist, wobei die konfokale Blende dazu ausgelegt ist, in der Fluidprobe (1) ein Austrittsgebiet auszuwählen.

3. Optisches Mikrospektrometriesystem gemäß Anspruch 1 oder Anspruch 2, **dadurch gekennzeichnet, daß** die erste Abtastvorrichtung (16) im optischen Weg des Austrittslichtstrahls (18) angeordnet ist und daß die erste Abtastvorrichtung (16) dazu ausgelegt ist, eine optische Achse des Austrittslichtstrahls durch ein Austrittsabtastgebiet in der Fluidprobe zu verlegen.

4. Optisches Mikrospektrometriesystem gemäß einem der Ansprüche 1 bis 3, das außerdem ein in den optischen Strahlenweg des Raman-Anregungslaserlichtstrahls (14) zwischen der ersten Abtastvorrichtung (16) und dem optischen Strahlenkombinierer (24) eingefügtes Beobachtungssystem (4) aufweist, wobei das Beobachtungssystem (4)
- ein Beleuchtungssystem (6, 27), das dazu ausgelegt ist, einen mit dem Raman-Anregungslaserlichtstrahl (14) kombinierten Beleuchtungslichtstrahl (17) zu erzeugen,
- ein Abbildungssystem (28, 5), das dazu ausgelegt ist, ein durch Reflexion und/oder Streuung des Beleuchtungslichtstrahls (17) an der Fluidprobe gebildetes Beobachtungsbild zu bilden, und
- ein Bilderkennungssystem, das dazu ausgelegt ist, eine Position und/oder eine Form wenigstens eines ausgewählten mikroskopischen Objekts (2) im Beobachtungsbild zu erfassen,
aufweist.

5. Optisches Mikrospektrometriesystem gemäß Anspruch 4, das außerdem ein Steuerungssystem (21) aufweist, das dazu ausgelegt ist, die zweite Abtastvorrichtung (10) so zu betreiben, daß der Lichtpinzettenlichtstrahl (8), der das wenigstens eine ausgewählte mikroskopische Objekt (2) einfängt, bewegt wird und daß das wenigstens eine ausgewählte mikroskopische Objekt (2) entlang eines Verlagerungswegs (38) zu einer vorbestimmten Position bewegt wird.

6. Optisches Mikrospektrometriesystem gemäß Anspruch 5, das außerdem einen Polarisator (70), der dazu ausgelegt ist, einen Polarisationsstatus des Raman-Anregungslaserlichtstrahls (14) auszuwählen, und/oder einen Analysator (71), der dazu ausgelegt ist, einen Polarisationsstatus des Austrittslichtstrahls (18, 48, 58) auszuwählen, aufweist.

7. Optisches Mikrospektrometriesystem gemäß einem der Ansprüche 1 bis 6, das außerdem
- eine weitere Lichtquelle (45), die dazu ausgelegt ist, einen Eingangslichtstrahl (44) auszusenden, die vorzugsweise eine abstimmbare Wellenlänge im Ultraviolett-, im sichtbaren und/oder nahen Infrarotbereich aufweist,
- einen optischen Strahlenkombinierer (47) zum Ausrichten des Eingangslichtstrahls (44) durch das Mikroskopobjektiv (22, 42) auf die Fluidprobe,
- wobei das Mikroskopobjektiv (22, 42) dazu ausgelegt ist, einen durch Reflexion des Eingangslichtstrahls (44) an der Fluidprobe (1) erzeugten reflektierten Austrittsstrahl (48) zu sammeln,
- ein mit einem Detektor (59) ausgestattetes Spektrometer (50),
- einen auf einem Strahlenweg des Eingangslichtstrahls (44) und des reflektierten Austrittsstrahls angeordneten Strahlteiler (54), wobei der Strahlteiler (54) dazu ausgelegt ist, den reflektierten Austrittsstrahl (48) auf das mit dem Detektor (59) ausgestattete Spektrometer (50) zu richten,
aufweist.

8. Optisches Mikrospektrometriesystem gemäß einem der Ansprüche 1 bis 6, das außerdem
- eine weitere Lichtquelle (45), die dazu ausgelegt ist, einen Eingangslichtstrahl (44) auszusenden, der vorzugsweise eine abstimmbare Wellenlänge im Ultraviolett-, im sichtbaren und/oder nahen Infrarotbereich aufweist,
- einen optischen Strahlenkombinierer (47) zum Ausrichten des Eingangslichtstrahls (44) durch das Mikroskopobjektiv (22, 42) auf die Fluidprobe,
- wobei die Probenstufe (3) im Spektralbereich des Eingangslichtstrahls (44) durchsichtig ist,
- ein weiteres Mikroskopobjektiv (52), das dazu ausgelegt ist, einen durch Übertragung des Eingangslichtstrahls (44) durch die Fluidprobe (1) erzeugten übertragenen Austrittsstrahl (48) zu sammeln,
- ein mit einem Detektor (59) ausgestattetes Spektrometer (50),
- ein optisches System (53, 51) zum Richten des übertragenen Austrittsstrahls (58) auf das mit dem Detektor (59) ausgestattete Spektrometer (50)
aufweist.

9. Optisches Mikrospektrometriesystem gemäß einem der Ansprüche 7 oder 8, **dadurch gekennzeichnet, daß** der Eingangslichtstrahl (44, 46) ein Lichtstrahl (44, 46) mit breitem Spektralbereich ist und daß der reflektierte Austrittsstrahl (48) oder der übertragene Austrittsstrahl (58) in Abhängigkeit von der Wellenlänge gemessen wird, um durch Reflexions- oder Absorptionsmessungen eine geeignete Wellenlänge im Ultraviolett-, im sichtbaren und/oder nahen Infrarotbereich zu bestimmen, um das wenigstens eine mikroskopische Objekt (2) in der Fluidprobe (1) einzufangen.

10. Optisches Mikrospektrometriesystem gemäß einem der Ansprüche 1 bis 6, **dadurch gekennzeichnet, daß** das Mikroskopobjektiv (22) ein Mikroskopobjektiv vom Reflexionstyp, vorzugsweise ein Cassegrain-Objektiv ist.

11. Optisches Mikrospektrometrieverfahren zur Analyse von mikroskopischen Objekten in einer Fluidprobe, wobei das Mikrospektrometrieverfahren die folgenden Schritte aufweist:
- Bereitstellen eines optischen Mikrospektrometriesystems gemäß einem der Ansprüche 1 bis 10,
- Ablegen einer Fluidprobe (1) auf dem Probenträger (3), der zum Aufnehmen der ein Fluid (30) und im Fluid (30) eingetauchte mikroskopische Objekte (2, 32) aufweisenden Fluidprobe (1) ausgelegt ist,
- Anordnen des Mikroskopobjektivs (22) und Einstellen der Fokussierung auf die Fluidprobe (1) unter Verwendung eines Beobachtungsbilds der Probe auf einem Videobildschirm,
- Identifizieren wenigstens eines ausgewählten mikroskopischen Objekts (2) im Sichtfeld des Beobachtungsbilds der Fluidprobe (1),
- Ausstrahlen eines Lichtpinzettenlichtstrahls (8) von der Lichtpinzettenlichtquelle (9),
- Ausrichten des Lichtpinzettenlichtstrahls (8) auf den kerbdichroitischen Strahlteiler (24),
- Verlagern des Lichtpinzettenlichtstrahls (8) auf die Ebene, auf der die Fluidprobe liegt, unter Verwendung des zweiten Abtastsystems um optisch das wenigstens eine ausgewählte mikroskopische Objekt (2) in der Fluidprobe (1) zu erfassen und/oder das wenigstens eine in der Fluidprobe (1) optisch erfaßte ausgewählte mikroskopische Objekt (2) in das Blickfeld des Beobachtungsbilds zu verlagern,
- Aussenden eines Raman-Anregungslaserlichtstrahls (14) vom Raman-Anregungslaser (15) aus,
- Ausrichten des Raman-Anregungslaserlichtstrahls (14) auf das zwischen dem Raman-Anregungslaser (15) und dem kerbdichroitischen Strahlteiler angeordnete Durchlaß-/Sperr-Filter (23),
- optisches Kombinieren des Lichtpinzettenlichtstrahls (8) und des Raman-Anregungslaserlichtstrahls (14) unter Verwendung des kerbdichroitischen Strahlteilers (24), um den Lichtpinzettenlichtstrahl (8) und den Raman-Anregungslaserlichtstrahl (14) gleichzeitig durch das Mikroskopobjektiv (22) auf das wenigstens eine mikroskopische Objekt (2) zu fokussieren,
- Verwenden der ersten Abtastvorrichtung (16), die auf dem Weg des optischen Strahls des Raman-Anregungslaserlichtstrahls (14) zwischen dem Durchlaß-/Sperr-Filter (23) und dem kerbdichroitischen Strahlteiler (24) angeordnet ist, um den ersten Brennpunkt des Raman-Anregungslaserlichtstrahls (14) durch ein erstes Abtastgebiet in der Fluidprobe (1) zu bewegen,
- Sammeln eines Austrittslichtstrahls (18), der aus der Streuung des Raman-Anregungslaserlichtstrahls (14) durch das wenigstens eine ausgewählte mikroskopische Objekt (2) resultiert,
- Empfangen des gesammelten Austrittsstrahls (18) auf dem Durchlaß-/Sperr-Filter (23) und Trennen des elastisch gestreuten Lichts und des unelastisch gestreuten Lichts vom Austrittsstrahl (18),
- Erfassen des getrennten, unelastisch gestreuten Lichts in Abhängigkeit von der Wellenlänge und Messen von Raman-Spektren des unelastisch gestreuten Lichts.

12. Optisches Mikrospektrometrieverfahren zur Analyse von mikroskopischen Objekten in einer Fluidprobe gemäß Anspruch 11, das außerdem die folgenden Schritte aufweist:
- Bilden eines Beobachtungsbilds durch Reflexion und/oder Streuung eines Beleuchtungslichtstrahls (17) auf der Fluidprobe (1) und
- Analysieren des Beobachtungsbilds unter Verwendung eines Partikelerfassungssystems, das dazu ausgelegt ist, die Position und/oder die Form wenigstens eines ausgewählten mikroskopischen Objekts (2) auf dem Beobachtungsbild zu bestimmen,
- Messen eines reflektierten Lichtstrahls, der durch Streuung und/oder durch Reflexion des Lichtpinzettenlichtstrahls (8) auf der Fluidprobe erzeugt worden ist,
- Beobachten von Veränderungen des gemessenen reflektierten Lichtstrahls (31) in Abhängigkeit von der Verlagerung des mikroskopischen Objekts (2), um daraus die Brownsche Bewegung des ausgewählten mikroskopischen Objekts (2) zu analysieren,
- Anpassen einer spektralen Karte unter Verwendung der durch das Partikelerfassungssystem analysierten Probenpositions- und/oder der Forminformation, um die gesamte Meßzeit zu reduzieren.

13. Optisches Mikrospektrometrieverfahren zur Analyse von mikroskopischen Objekten in einer Fluidprobe gemäß Anspruch 11 oder 12, **dadurch gekennzeichnet, daß**
- der Schritt des Identifizierens wenigstens eines ausgewählten mikroskopischen Objekts (2) im Blickfeld des Beobachtungsbilds der Fluidprobe (1) das Verwenden eines Partikelerfassungssystems zum Erkennen der Positionen einer Anzahl ausgewählter mikroskopischer Objekte (2) aufweist,
- der Schritt des Aussendens eines Lichtpinzettenlichtstrahls (8) außerdem einen Schritt des Verwendens einer Abtastvorrichtung wie etwa eines akusto-optischen Modulators oder eines räumlichen Lichtmodulators zum Erzeugen eines Lichtmusters mit einer Anzahl Brennpunkten in der Brennebene des Mikroskopobjektivs (22) aufweist, um so die Anzahl ausgewählter mikroskopischer Objekte (2) optisch gleichzeitig zu erfassen,
und daß es die Schritte
- des Bestimmens eines begrenzten Kartografierungsgebiets (60) der Positionen der Anzahl ausgewählter mikroskopischer Objekte (2),
- des Verwendens des ersten Abtastsystems (16) zum Abtasten des Raman-Anregungslaserlichtstrahls und des Austrittslichtstrahls (18) zum Erhalten von Raman-spektrometrischen Messungen innerhalb des begrenzten Kartografierungsgebiets (60) und/oder innerhalb der Positionen der Anzahl ausgewählter mikroskopischer Objekte (2)
aufweist.

14. Optisches Mikrospektrometrieverfahren zur Analyse von mikroskopischen Objekten in einer Fluidprobe gemäß Anspruch 12 oder 13, das außerdem den folgenden Schritt aufweist:
- Beobachten des Verlagerungswegs (38) des wenigstens einen ausgewählten mikroskopischen Objekts (2) unter Verwendung eines zum Verfolgen von Partikeln in dem Beobachtungsbild ausgelegten Bildverarbeitungssystems.

## Revendications

1. Système de microspectrométrie optique pour analyser des objets microscopiques dans un échantillon fluide, ledit système de microspectrométrie optique comprenant :
- un porte-échantillon (3) conçu pour recevoir un échantillon fluide (1) comprenant un fluide et des objets microscopiques (2, 32) immergés dans ledit fluide (30) ;
- un laser d'excitation Raman (15) conçu pour rayonner un faisceau lumineux laser d'excitation Raman (14) ;
- un objectif de microscope (22) pour focaliser le faisceau lumineux laser d'excitation Raman (14) sur un premier point de focalisation dans ledit échantillon fluide (1) ;
- un système optique (22) pour collecter un faisceau lumineux de sortie (18) émis par l'échantillon fluide (1) sous l'effet d'une diffusion dudit faisceau lumineux laser d'excitation Raman (14) rayonnant sur l'échantillon fluide (1) ;
- un filtre d'injection-réjection (23) conçu pour diriger ledit faisceau lumineux laser d'excitation Raman (14) le long d'un trajet de faisceau optique vers ledit objectif de microscope (22), le filtre d'injection-réjection (23) étant conçu pour recevoir le faisceau de sortie (18) résultant de la diffusion dudit faisceau lumineux laser d'excitation Raman (14) par l'échantillon fluide (1) et collecté par ledit système optique (22), et ledit filtre d'injection-réjection (23) étant conçu pour séparer la lumière diffusée de manière élastique et la lumière diffusée de manière non-élastique dudit faisceau de sortie (18) ;
- un spectromètre Raman (20) équipé d'un détecteur (19) pour détecter ladite lumière diffusée de manière inélastique séparée dudit faisceau lumineux de sortie (18) par le filtre d'injection-réjection (23) en fonction d'une longueur d'onde et pour mesurer des spectres Raman;
- un premier dispositif de balayage (16), ledit premier dispositif de balayage (16) étant placé sur le trajet de faisceau optique dudit faisceau lumineux laser d'excitation Raman (14) entre le filtre d'injection-réjection (23) et l'objectif de microscope (22), pour déplacer le premier point de focalisation dudit faisceau lumineux laser d'excitation Raman (14) à travers une première zone de balayage dans ledit échantillon fluide (1) ;
- une source de lumière formant pince optique (9) conçue pour émettre un faisceau lumineux formant pince optique (8) ;
- un combineur de faisceaux optiques (24) consistant en un diviseur de faisceau dichroïque à fente, inséré sur le trajet optique entre le premier dispositif de balayage (16) et l'objectif de microscope (22), le combineur de faisceaux optiques (24) étant conçu pour recevoir ledit faisceau lumineux laser d'excitation Raman (14) et ledit faisceau lumineux formant pince optique (8) et pour diriger simultanément ledit faisceau lumineux laser d'excitation Raman et ledit faisceau lumineux formant pince optique à travers ledit objectif de microscope (22), de façon à focaliser simultanément le faisceau lumineux laser d'excitation Raman sur ledit premier point de focalisation et le faisceau lumineux formant pince optique sur un deuxième point de focalisation dans ledit échantillon fluide (1), le diviseur de faisceau dichroïque à fente réfléchissant le faisceau lumineux formant pince optique (8) vers l'objectif de microscope (22) et, simultanément, le diviseur de faisceau dichroïque à fente transmettant le faisceau lumineux laser d'excitation Raman (14) vers l'objectif de microscope (22) ;
- un deuxième dispositif de balayage (10) inséré sur un trajet de faisceau formant pince optique entre la source de lumière formant pince optique (9) et le combineur de faisceaux optiques (24), ledit deuxième dispositif de balayage (10) étant conçu pour déplacer le faisceau lumineux formant pince optique (8) dans le plan sur lequel se trouve l'échantillon fluide, de façon à piéger optiquement au moins un objet microscopique sélectionné (2) dans ledit échantillon fluide (1) dans la première zone de balayage et/ou pour déplacer ledit au moins un objet microscopique sélectionné (2) piégé optiquement dans ledit échantillon fluide (1) en direction de la première zone de balayage ;
- un premier détecteur de position (12) placé sur un trajet de faisceau optique du faisceau lumineux formant pince optique (8), le combineur de faisceaux optiques (24) étant placé entre la source de lumière formant pince optique (9) et le premier détecteur de position (12), le combineur de faisceaux optiques (24) transmettant une partie du faisceau lumineux formant pince optique (8) au premier détecteur de position (12), et ledit premier détecteur de position (12) étant conçu pour détecter une position ou un mouvement dudit faisceau lumineux formant pince optique (8) incident sur ledit échantillon fluide (1) ; et
- un deuxième diviseur de faisceau dichroïque à fente (25) et un deuxième détecteur de position (13), le deuxième diviseur de faisceau dichroïque à fente (25) étant placé entre le combineur de faisceaux optiques (24) et le premier dispositif de balayage (16) sur un trajet de faisceau optique d'un faisceau réfléchi formé par réflexion dudit faisceau lumineux formant pince optique (8) sur ledit échantillon fluide, ledit deuxième diviseur de faisceau dichroïque à fente (25) et ledit deuxième détecteur de position (13) étant conçus pour détecter une position ou un mouvement dudit faisceau réfléchi après réflexion sur ledit échantillon fluide (1), et ledit deuxième diviseur de faisceau dichroïque à fente (25) transmettant le faisceau diffusé par effet Raman (18) vers le spectromètre Raman (20).

2. Système de microspectrométrie optique selon la revendication 1, comprenant en outre une ouverture confocale placée sur le trajet optique du faisceau lumineux de sortie (18) dans un plan optiquement conjugué à un plan situé à l'intérieur dudit échantillon fluide, ladite ouverture confocale étant conçue pour sélectionner une zone de sortie dudit échantillon fluide (1).

3. Système de microspectrométrie optique selon la revendication 1 ou la revendication 2, dans lequel le premier dispositif de balayage (16) est placé sur le trajet optique du faisceau lumineux de sortie (18) et ledit premier dispositif de balayage (6) est conçu pour déplacer un axe optique dudit faisceau lumineux de sortie à travers une zone de balayage de sortie dans ledit échantillon fluide.

4. Système de microspectrométrie optique selon l'une quelconque des revendications 1 à 3, comprenant en outre un système d'observation (4) inséré sur le trajet de faisceau optique dudit faisceau lumineux laser d'excitation Raman (14) entre le premier dispositif de balayage (16) et le combineur de faisceaux optiques (24), ledit système d'observation (4) comprenant :
- un système d'éclairage (6, 27) conçu pour générer un faisceau lumineux d'éclairage (17) combiné audit faisceau lumineux laser d'excitation Raman (14) ;
- un système d'imagerie (28, 5) conçu pour former une image d'observation formée par réflexion et/ou diffusion dudit faisceau lumineux d'éclairage (17) sur ledit échantillon fluide ; et
- un système de reconnaissance d'image conçu pour détecter une position et/ou une forme d'au moins un objet microscopique sélectionné (2) dans ladite image d'observation.

5. Système de microspectrométrie optique selon la revendication 4, comprenant en outre un système de commande (21) conçu pour piloter ledit deuxième dispositif de balayage (10) de façon à déplacer le faisceau lumineux formant pince optique (8) qui piège ledit au moins un objet microscopique sélectionné (2) et de façon à déplacer ledit au moins un objet microscopique sélectionné (2) le long d'un trajet de migration (38) vers une position prédéterminée.

6. Système de microspectrométrie optique selon la revendication 5, comprenant en outre un polariseur (70) conçu pour sélectionner un état de polarisation dudit faisceau lumineux laser d'excitation Raman (14) et/ou un analyseur (71) conçu pour sélectionner un état de polarisation dudit faisceau lumineux de sortie (18, 48, 58).

7. Système de microspectrométrie optique selon l'une quelconque des revendications 1 à 6, comprenant en outre :
- une autre source de lumière (45) conçue pour émettre un faisceau lumineux d'entrée (44), ayant de préférence une longueur d'onde réglable dans le domaine de l'ultraviolet, du visible et/ou du proche infrarouge ;
- un combineur de faisceaux optiques (47) pour diriger ledit faisceau lumineux d'entrée (44) à travers ledit objectif de microscope (22, 42) sur ledit échantillon fluide ;
- ledit objectif de microscope (22, 42) étant conçu pour collecter un faisceau réfléchi de sortie (48) généré par réflexion dudit faisceau lumineux d'entrée (44) sur ledit échantillon fluide (1) ;
- un spectromètre (50) équipé d'un détecteur (59) ;
- un diviseur de faisceau (54) disposé sur un trajet de faisceau dudit faisceau lumineux d'entrée (44) et dudit faisceau réfléchi de sortie (48), ledit diviseur de faisceau (54) étant conçu pour diriger ledit faisceau réfléchi de sortie (48) sur le spectromètre (50) équipé du détecteur (59).

8. Système de microspectrométrie optique selon l'une quelconque des revendications 1 à 6, comprenant en outre :
- une autre source de lumière (45) conçue pour émettre un faisceau lumineux d'entrée (46), ayant de préférence une longueur d'onde réglable dans le domaine de l'ultraviolet, du visible et/ou du proche infrarouge ;
- un combineur de faisceaux optiques (47) pour diriger ledit faisceau lumineux d'entrée (44) à travers ledit objectif de microscope (22, 42) sur ledit échantillon fluide ;
- le porte-échantillon (3) étant transparent dans le domaine spectral dudit faisceau lumineux d'entrée (44) ;
- un autre objectif de microscope (52) étant conçu pour collecter un faisceau transmis de sortie (58) généré par transmission dudit faisceau lumineux d'entrée (46) à travers ledit échantillon fluide (1) ;
- un spectromètre (50) équipé d'un détecteur (59) ;
- un système optique (53, 51) pour diriger ledit faisceau transmis de sortie (58) sur le spectromètre (50) équipé du détecteur (59).

9. Système de microspectrométrie optique selon l'une quelconque des revendications 7 ou 8, dans lequel ledit faisceau lumineux d'entrée (44, 46) est un faisceau lumineux à large domaine spectral (44, 46), et dans lequel le faisceau réfléchi de sortie (48) ou le faisceau transmis de sortie (58) est mesuré en fonction de la longueur d'onde, de façon à déterminer par des mesures de réflexion ou d'absorption une longueur d'onde appropriée dans le domaine de l'ultraviolet, du visible et/ou du proche infrarouge, adaptée pour piéger optiquement ledit au moins un objet microscopique sélectionné (2) dans ledit échantillon fluide (1).

10. Système de microspectrométrie optique selon l'une quelconque des revendications 1 à 9, dans lequel ledit objectif de microscope (22) est un objectif de microscope à réflexion, de préférence un objectif de type Cassegrain.

11. Procédé de microspectrométrie optique pour analyser des objets microscopiques dans un échantillon fluide, ledit procédé de microspectrométrie optique comprenant les étapes suivantes :
- prévoir un système de microspectrométrie optique selon l'une quelconque des revendications 1 à 10 ;
- placer un échantillon fluide (1) sur le porte-échantillon (3) conçu pour recevoir ledit échantillon fluide (1) comprenant un fluide (30) et des objets microscopiques (2, 32) immergés dans ledit fluide (30) ;
- placer l'objectif de microscope (22) et ajuster la focalisation sur l'échantillon fluide (1) en utilisant une image d'observation de l'échantillon sur un affichage d'images vidéo ;
- identifier au moins un objet microscopique sélectionné (2) dans le champ de vision de l'image d'observation de l'échantillon fluide (1) ;
- émettre un faisceau lumineux formant pince optique (8) à partir de la source de lumière formant pince optique (9) ;
- diriger le faisceau lumineux formant pince optique (8) sur le diviseur de faisceau dichroïque à fente (24) ;
- déplacer le faisceau lumineux formant pince optique (8) dans le plan sur lequel se trouve l'échantillon fluide au moyen du deuxième système de balayage, de façon à piéger optiquement ledit au moins un objet microscopique sélectionné (2) dans ledit échantillon fluide (1) et/ou déplacer ledit au moins un objet microscopique sélectionné (2) piégé optiquement dans ledit échantillon fluide (1) dans le champ de vision de l'image d'observation ;
- émettre un faisceau lumineux laser d'excitation Raman (14) à partir d'un laser d'excitation Raman (15) ;
- diriger le faisceau lumineux laser d'excitation Raman (14) sur le filtre d'injection-réjection (23) disposé entre le laser d'excitation Raman (15) et le diviseur de faisceau dichroïque à fente (24) ;
- combiner optiquement ledit faisceau lumineux formant pince optique (8) et ledit faisceau lumineux laser d'excitation Raman (14) au moyen du diviseur de faisceau dichroïque à fente (24), de façon à focaliser simultanément ledit faisceau lumineux formant pince optique (8) et ledit faisceau lumineux laser d'excitation Raman (14) à travers l'objectif de microscope (22) sur ledit au moins un objet microscopique sélectionné (2) ;
- utiliser le premier dispositif de balayage (16) placé sur le trajet de faisceau optique dudit faisceau lumineux laser d'excitation Raman (14) entre le filtre d'injection-réjection (23) et le diviseur de faisceau dichroïque à fente (24) pour déplacer le premier point de focalisation dudit faisceau lumineux laser d'excitation (14) à travers une première zone de balayage dans ledit échantillon fluide (1) ;
- collecter un faisceau lumineux de sortie (18) résultant d'une diffusion dudit faisceau lumineux laser d'excitation Raman (14) par ledit au moins un objet microscopique sélectionné (2) ;
- recevoir le faisceau lumineux de sortie (18) sur le filtre d'injection-réjection (23) et séparer la lumière diffusée de manière élastique et la lumière diffusée de manière non-élastique dudit faisceau de sortie (18) ;
- détecter ladite lumière diffusée de manière non-élastique séparée en fonction de la longueur d'onde et mesurer des spectres Raman à partir de la lumière diffusée de manière non-élastique.

12. Procédé de microspectrométrie optique pour analyser des objets microscopiques dans un échantillon fluide selon la revendication 11, comprenant en outre les étapes suivantes :
- former une image d'observation par réflexion et/ou diffusion d'un faisceau lumineux d'éclairage (17) sur ledit échantillon fluide, et
- analyser ladite image d'observation au moyen d'un système de localisation de particules conçu pour déterminer la position et/ou la forme d'au moins un objet microscopique sélectionné (2) dans ladite image d'observation ;
- mesurer un faisceau lumineux réfléchi (31) généré par diffusion et/ou réflexion du faisceau lumineux formant pince optique (8) sur l'échantillon fluide ;
- surveiller les changements dudit faisceau lumineux réfléchi mesuré (31) en fonction d'un déplacement dudit objet microscopique sélectionné (2), de façon à analyser un mouvement Brownien dudit objet microscopique sélectionné (2) ;
- adapter une cartographie spectrale en utilisant les informations de position et/ou de forme de l'échantillon analysées par le système de localisation de particules de façon à réduire le temps de mesure total.

13. Procédé de microspectrométrie optique pour analyser des objets microscopiques dans un échantillon fluide selon la revendication 11 ou 12, dans lequel :
- l'étape d'identification d'au moins un objet microscopique sélectionné (2) dans le champ de vision de l'image d'observation de l'échantillon fluide (1) comprend l'utilisation d'un système de localisation de particules pour la reconnaissance des positions d'une pluralité d'objets microscopiques sélectionnés (2) ;
- l'étape d'émission d'un faisceau lumineux formant pince optique (8) comprend en outre une étape d'utilisation d'un dispositif de balayage, tel qu'un modulateur acousto-optique ou un modulateur spatial de lumière pour générer un motif lumineux ayant un pluralité de points de focalisation dans le plan focal de l'objectif microscopique (22) afin de piéger optiquement simultanément ladite pluralité d'objets microscopiques sélectionnés (2) ;
et comprenant les étapes de :
- détermination d'une zone de cartographie limitée (60) à partir desdites positions de ladite pluralité d'objets microscopiques sélectionnés (2) ;
- utilisation du premier système de balayage (16) pour balayer le faisceau lumineux laser d'excitation Raman et le faisceau lumineux de sortie (18) pour l'acquisition de mesures de spectrométrie Raman à l'intérieur de ladite zone de cartographie limitée (60) et/ou à l'intérieur desdites positions de ladite pluralité d'objets microscopiques sélectionnés (2).

14. Procédé de microspectrométrie optique pour analyser des objets microscopiques dans unéchantillon fluide selon la revendication 12 ou 13, comprenant en outre l'étape suivante :
- surveiller le trajet de migration (38) dudit au moins un objet microscopique sélectionné (2) au moyen d'un système de traitement d'image conçu pour le suivi de particules dans ladite image d'observation.
